# EUROPEAN PATENT SPECIFICATION

(11) **EP 4 116 555 B1**
(45) Date of publication and mention of the grant of the patent: **26.03.2025**
(21) Application number: 21183778.6
(22) Date of filing: 05.07.2021
(51) Int. Cl.: F02C 3/22, F02C 3/30, F23R 3/34

(54) **RETROFITTING METHOD FOR A GAS TURBINE**
NACHRÜSTVERFAHREN FÜR EINE GASTURBINE
PROCÉDÉ DE MODIFICATION D'UNE TURBINE À GAZ

(43) Date of publication of application: 11.01.2023
(73) Proprietor: Ansaldo Energia Switzerland AG, 5400 Baden (CH)
(72) Inventor: CIANI, Andrea, 8057 ZÜRICH (CH); PENNELL, Douglas, 5210 WINDISCH (CH) (CH); GRANET, Victor, 5430 WETTINGEN (CH)
(74) Representative: Studio Torta S.p.A.

(56) References cited:
- EP-A1- 2 902 708
- US-A1- 2009 277 182
- US-A1- 2017 298 817
- US-B1- 6 201 029
- US-B2- 9 523 311

## Description

The present invention relates to a retrofitting method for a gas turbine.

The gas turbine is a gas turbine for power generation and is typically connected to an electric generator, which is in turn connected to an electric grid.

### BACKGROUND

Power plants for power generation comprise a gas turbine connected to an electric generator. The gas turbine is supplied with air and a fuel and convert the energy of the fuel into mechanical power available at the shaft. The shaft is connected to the shaft of an electric generator, for generating electric power to be supplied to an electric grid.

Traditionally the fuel supplied to the gas turbine is natural gas or oil; in the first case only natural gas is supplied to the gas turbine, in the second case oil and, possibly water (emulsion of oil and water), are supplied to the gas turbine.

The market requires the gas turbines to operate in the future with fuels different from natural gas or oil; in particular gas turbines should be able to correctly operate with hydrogen (pure hydrogen) or mixtures containing hydrogen. The hydrogen amount in the mixtures can be small or large, e.g. a mixture can contain about 10% or 30% or 50% or 70% or 80% or 90% or 95% or more hydrogen and the balance can be natural gas.

Gas turbines are known having combustion systems, which comprise a first combustion area and a second combustion area downstream of the first combustion area. At the first combustion area fuel is combusted with oxygen contained in the compressed air from the compressor generating a first hot gas and at the second combustion area fuel is combusted with oxygen still present in the first hot gas generating a second hot gas that is expanded in the turbine.

Combustion systems that have been designed for operation with natural gas and/or oil could not be able to correctly operate with hydrogen or mixtures containing hydrogen, because of the much higher reactivity of the hydrogen in the combustion system of a gas turbine than natural gas or oil. These operating problems appear, in particular, in gas turbines with premixed combustion or at least partly premixed combustion (i.e. combustion occurring to a large extent by premixed combustion and to a smaller extent by diffusion combustion).

The much higher reactivity makes the hydrogen or mixture containing hydrogen to combust faster once it has been supplied to the combustion system than natural gas or oil; the consequence is that the flame generated by hydrogen or mixture containing hydrogen anchors more upstream than flames generated by natural gas or oil, with risks of flashback. Such risks exist both at the first and at the second combustion areas.

US 9,532,311 B2 discloses a Method for operating a gas turbine, wherein the gas turbine comprises at least a compressor, a first combustion area where fuel is combusted with air fed by the compressor generating a first hot gas, a second combustion area where fuel is combusted with oxygen contained in the first hot gas generating a second hot gas, a turbine where the second hot gas is expanded to collect mechanical power. The method comprises supplying fuel being hydrogen or mixture containing hydrogen for the first combustion area, supplying fuel being hydrogen or mixture containing hydrogen for the second combustion area, supplying water for the first combustion area, and regulating the amount of water supplied to the first combustion area based on at least a control parameter indicative of the reactivity of the mix of hydrogen or mixture containing hydrogen and first hot gas at the second combustion area

Other example of known methods are disclosed in US 6,201,029 B1 and in US 2017/298817 A1.

### SUMMARY

An aspect of the invention includes providing a retrofitting method for a gas turbine by which a gas turbine that was designed for operation with natural gas or oil can be operated with hydrogen or a mixture containing hydrogen with limited risk of flashback.

These and further aspects are attained by providing an operating method and a retrofitting method for a gas turbine in accordance with the accompanying claims.

Advantageously, flashback can be counteracted at the same time at both the first and the second combustion areas, with water injection at the first combustion area.

At the first combustion area hydrogen or a mixture containing hydrogen is combusted with air from the compressor; water is also injected at the first combustion area. This water injected at the first combustion area cools the first combustion area (preferably at zones close to the injectors) counteracting flashback.

In addition, because of the water, at the first combustion area more fuel has to be combusted and thus more oxygen has to be consumed compared to a situation without water injection, because a part of the heat generated by the combustion must be used for heating and evaporating the water.

Therefore, water injection at the first combustion area results in the generation of a first hot gas containing a lower percentage of oxygen, both because oxygen is consumed to a larger amount at the first combustion area and because the presence of water inevitably reduces the percentage of the other components in the hot gas.

The reactivity, i.e. the rate of reaction of a mix of fuel and hot gas, which can be measured for example with reference to the auto ignition time of the fuel in the first hot gas, depends on the composition of the mix and, in particular, the fuel composition and the amount of oxygen in the mix. Thus, the injection of water at the first combustion area causes a reduction of the reactivity, and thus a longer auto ignition time of the fuel at the second combustion area, because of the reduced oxygen percentage and increased water content in the first hot gas that is mixed with the fuel at the second combustion area.

This lower reactivity obtained thanks to the water injection at the first combustion area counteracts flashback at the second combustion area.

### BRIEF DESCRIPTION OF THE DRAWINGS

Further characteristics and advantages will be more apparent from the description of a preferred but non-exclusive embodiment of an operating method and a retrofitting method for a gas turbine, illustrated by way of non-limiting example in the accompanying drawings, in which:
Figure 1 schematically shows a gas turbine;
Figures 2 and 3 show different examples of combustion systems;
Figure 4 shows a gas turbine after refurbishment,
Figure 5 shows an example of regulation.

### DETAILED DESCRIPTION OF EXEMPLARY EMBODIMENTS

With reference to the figures, these show a gas turbine 1 that comprises a compressor 2, a combustion system 3, a turbine 5 downstream of the combustion system 3 and an exhaust system 6 for discharging a flue gas from the turbine 5.

The combustion system 3 has a first combustion area 8 where a first fuel 9 is combusted with air 10 fed by the compressor 2 generating a first hot gas 12, a second combustion area 13 where a second fuel 14 is combusted with oxygen contained in the first hot gas 12 generating a second hot gas 15 that is fed to the turbine 5. At the turbine 5 the second hot gas 15 is expanded to collect mechanical power.

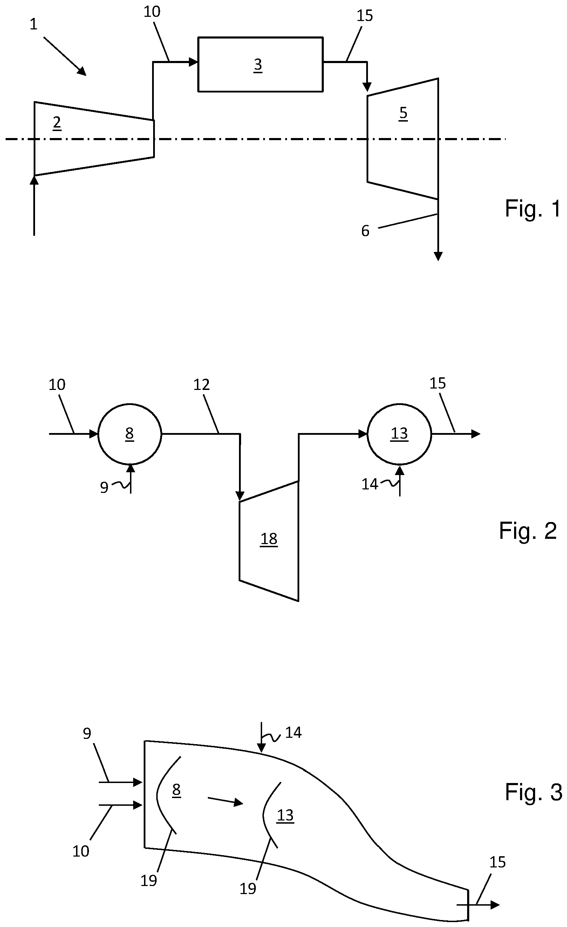

In different examples, the first combustion area 8 is defined by a first combustor and the second combustion area 13 is defined by a second combustor; figure 2 shows an example where the first combustion area 8 is defined in a first combustor and the second combustion area 13 is defined in a second combustor. Between the first and the second combustor additional components may be provided or not (i.e. the first and the second combustor can be directly connected without additional components in-between). In this respect, figure 2 shows an example where a turbine 18 is provided between the first and the second combustors for partially expanding the first hot gas 12 passing through it.

Alternatively, the first combustion area 8 and the second combustion area 13 can also be both defined in a same combustor. Figure 3 shows an example with a combustor containing both the first combustion area 8 and the second combustion area 13. For example the first fuel 9 may be fed at a part upstream (with reference to the gas flow direction through the combustor) of the combustor and the second fuel 14 may be fed at an intermediate part or downstream part (with reference to the gas flow direction through the combustor) of the combustor. In this figure reference 19 identifies the flames at the first combustion area 8 and second combustion area 13.

The method for retrofitting the gas turbine 1 comprises providing a supply 25 of fuel being hydrogen or a mixture containing hydrogen for the first combustion area 8 and for the second combustion area 13. For example, a supply 25 for each combustion area 8, 13 may be provided or one supply system that feeds both the first and the second combustion areas 8, 13 may also be provided.

According to the method, a supply of water for the first combustion area may be provided or not. In this respect, in case a supply of water is already present, no need of providing the supply of water exists; for example a supply of water may be present because it is used for power augmentation (i.e. to supply water in the combustor to increase the power generated by the gas turbine) or because the first combustion chamber is or can be supplied by an emulsion of oil and water. In contrast, in case a supply of water is not present, such a supply of water needs to be provided; for example a supply of water can be provided by providing a nozzle or lance beside the nozzle or lance for the fuel, because at this position space is usually available.

Preferably, the first combustion area 8 and the second combustion area 13 are provided with a dual fuel supply system (before retrofitting). The dual fuel supply system has a line 20 for the natural gas and a line 21 for an emulsion of oil and water; the line 21 is in turn fed by a line 22 for oil and a line 23 for water. Retrofitting can thus take advantage of the dual fuel supply system.

In this situation, providing a supply 25 of fuel being hydrogen or mixture containing hydrogen to the first combustion area 8 comprises connecting the supply 25 to the line 20 for natural gas.

In addition, providing a supply 25 of a fuel being hydrogen or a mixture containing hydrogen to the second combustion area 13 preferably also comprises connecting the supply of fuel being hydrogen or a mixture containing hydrogen to the line 20 for natural gas.

In this embodiment of the method, typically it is not required the provision of the supply of water, because the line 23 and line 21 can be used for water supply in the first combustion area 8.

Dual fuel supply systems are known which have concentric nozzles, which open in the combustion chamber, with inner nozzle for the emulsion of oil and water connected to the line 21 and outer annular nozzle for natural gas connected to the line 20. Refurbishment of combustion systems with these nozzles is advantageous because the water is injected at the centre of the hydrogen or mixture containing hydrogen and counteracts flashback in a very effective way, thanks to the positioning of the water injection.

Then, the method comprises providing a controller arranged for receiving at least a control parameter indicative of the reactivity of the mix of hydrogen or mixture containing hydrogen and first hot gas at the second combustion area and for regulating the amount of water supplied to the first combustion area 8 based on the at least a control parameter.

The controller may be a software, e.g. implemented by an upgrade of the control system of the gas turbine or can be a separate hardware connected to the control system of the gas turbine or also connected directly to the valves that regulate the fuel or water through the lines 20, 21, 22, 23.

In addition, sensors connected to the controller to measure the control parameter can also be provided. For example, the sensors can be a gas analyser that detects the composition of the hydrogen (purity) or the composition of the hydrogen containing mixture and/or the composition of the first hot gas. The sensor can also be temperature and/or pressure sensors.

In addition or alternatively, the controller is provided with a software for calculating or simulating the control parameter. The software can be a commercial software simulating the behaviour of the gas turbine and its operating parameters; for example the software can calculate or simulate the temperature and/or pressure at the second combustion area or also calculate the auto ignition time (that is indicative of the reactivity) of the mix of hydrogen or mixture containing hydrogen and first hot gas.

In addition, the control parameter can also be manually given to the controller; for example the percentage of hydrogen in the mixture containing hydrogen may be typed in, e.g. via a keyboard, when this parameter is available or also other parameters (e.g. pressure and/or temperature at the second combustion area) may be calculated or measured and typed in, e.g. via a keyboard.

Refurbishment of dual fuel gas turbines is particularly advantageous, because it can be carried out with limited component change, addition or replacement.

The present invention also refers to a method for operating a gas turbine.

The method for operating a gas turbine comprises supplying the first combustion area 8 with fuel being hydrogen or mixture containing hydrogen, supplying the second combustion area 13 with fuel being hydrogen or mixture containing hydrogen and supplying the first combustion area with water.

According to the method, at least a control parameter indicative of the reactivity of the mix of hydrogen or mixture containing hydrogen and first hot gas at the second combustion area is determined and the amount of water supplied to the first combustion area 8 is regulated based on the one or more control parameters.

The at least a control parameter comprises a temperature of the mix of hydrogen or mixture containing hydrogen and first hot gas and/or a pressure at the second combustion area and/or a hydrogen or mixture containing hydrogen purity or composition and/or a first hot gas composition and can be measured and/or calculated and/or simulated.

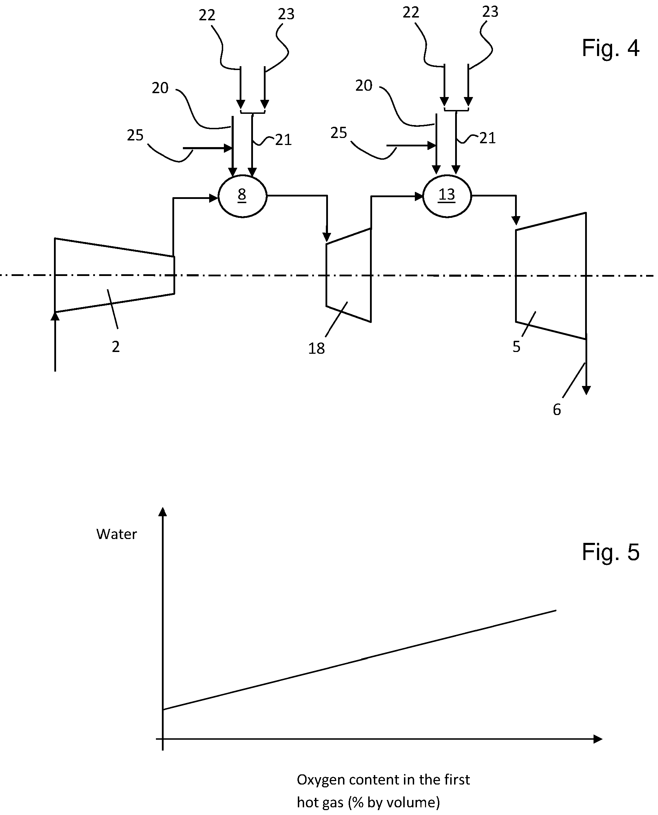

Figure 5 shows an example of the relationship between water injected at the first combustion area and the composition of the first hot gas fed to the second combustion area; e.g. in particular the oxygen content of the first hot gas fed to the second combustion area can be taken as a control parameter. This figure shows that when the reactivity of the mix increases (in this example because of the increased oxygen content in the first hot gas and thus in the mix) the water supply is increased, to increase the water content in the mix and therefore reduce the reactivity of the mix. For example, a target value or target range for the oxygen content in the first hot gas may be set and the water supply can be regulated to maintain the oxygen content at this value or within this range. Therefore, water supply is increased when the oxygen content is higher than the target value or range and reduced when the oxygen content in the flue gas is lower than the target value or range. Same regulation is possible for other parameters or combination of different parameters.

**In** the preferred embodiment where the gas turbine is a dual fuel gas turbine and thus the first combustion area 8 has a dual fuel supply system comprising the line 20 for natural gas and the line 21 for an emulsion of oil and water, the fuel being hydrogen or a mixture containing hydrogen is fed via the line 20 for natural gas and the water is fed via the line 21 for the emulsion.

Likewise, in the dual fuel gas turbine with the second combustion area 13 provided with a dual fuel supply system comprising a line 20 for natural gas and a line 21 for an emulsion of oil and water, the fuel being hydrogen or a mixture containing hydrogen is fed via the line 20 for natural gas.

Advantageously, according to the method the gas turbine output power can be maintained substantially constant during the regulations. Regulations are in fact not made in view of power regulations but in order to counteract flashback.

Naturally the features described may be independently provided from one another. In practice the materials used and the dimensions can be chosen at will according to requirements and to the state of the art.

## Claims

1. Method for retrofitting a gas turbine that was designed for operation with natural gas or oil, the gas turbine (1) comprising at least a compressor (2), a first combustion area (8) where fuel is combusted with air fed by the compressor (2) generating a first hot gas, a second combustion area (13) where fuel is combusted with oxygen contained in the first hot gas generating a second hot gas, a turbine (5) where the second hot gas is expanded to collect mechanical power,
the method comprising
- providing a supply of fuel being hydrogen or mixture containing hydrogen for the first combustion area (8),
- providing a supply of fuel being hydrogen or mixture containing hydrogen for the second combustion area (13),
- providing a supply of water for the first combustion area (8) if not present,
- providing a controller arranged for receiving at least a control parameter indicative of the reactivity of the mix of hydrogen or mixture containing hydrogen and first hot gas at the second combustion area and regulating the amount of water supplied to the first combustion area based on the at least a control parameter;
**characterized in that** the controller is provided with a software configured to calculate an auto ignition time of the mix of hydrogen or mixture containing hydrogen and first hot gas.

2. The method of claim 1, **characterised by** further comprising providing sensors connected to the controller for measuring the control parameter and/or providing an elaborator connected to the controller for calculating or simulating the control parameter.

3. The method of any of the preceding claims, **characterized in that** the first combustion area is provided with a dual fuel supply system comprising a line (20) for natural gas and a line (21) for an emulsion of oil and water, wherein providing a supply of a fuel being hydrogen or mixture containing hydrogen to the first combustion area comprises connecting the supply (25) of fuel being hydrogen or mixture containing hydrogen to the line (20) for natural gas.

4. Method according to any of the preceding claims, **characterized in that**
the second combustion area is provided with a dual fuel supply system comprising a line (20) for natural gas and a line (21) for an emulsion of oil and water,
wherein providing a supply of a fuel being hydrogen or a mixture containing hydrogen to the second combustion area comprises connecting the supply (25) of fuel being hydrogen or mixture containing hydrogen to the line (20) for natural gas.

5. The method of any of claims 1 through 4, **characterised in that** the first combustion area is defined by a first combustor and the second combustion area is defined by a second combustor.

6. The method of any of claims 1 through 4, **characterised in that** the first combustion area and the second combustion area are both defined in a same combustor.

## Patentansprüche

1. Verfahren zum Nachrüsten einer Gasturbine, die für den Betrieb mit Erdgas oder Öl konstruiert wurde,
wobei die Gasturbine (1) mindestens einen Verdichter (2), einen ersten Verbrennungsbereich (8), wo Brennstoff mit Luft verbrannt wird, die von dem Verdichter (2) zugeführt wird, wodurch ein erstes Heißgas erzeugt wird, einen zweiten Verbrennungsbereich (13), wo Brennstoff mit Sauerstoff verbrannt wird, der in dem ersten Heißgas enthalten ist, wodurch ein zweites Heißgas erzeugt wird, und eine Turbine (5) umfasst, wo das zweite Heißgas expandiert wird, um mechanische Leistung zu gewinnen,
wobei das Verfahren umfasst:
- Bereitstellen einer Zufuhr von Brennstoff, der Wasserstoff oder wasserstoffhaltiges Gemisch ist, für den ersten Verbrennungsbereich (8),
- Bereitstellen einer Zufuhr von Brennstoff, der Wasserstoff oder wasserstoffhaltiges Gemisch ist, für den zweiten Verbrennungsbereich (13),
- Bereitstellen einer Zufuhr von Wasser für den ersten Verbrennungsbereich (8), falls nicht vorhanden,
- Bereitstellen einer Steuereinrichtung, die dazu eingerichtet ist, mindestens einen Steuerungsparameter zu empfangen, der die Reaktionsfähigkeit der Wasserstoffmischung oder des wasserstoffhaltigen Gemischs und des ersten Heißgases am zweiten Verbrennungsbereich angibt, und Regeln der Menge an Wasser, die dem ersten Verbrennungsbereich zugeführt wird, basierend auf dem mindestens einen Steuerungsparameter;
**dadurch gekennzeichnet, dass** die Steuereinrichtung mit einer Software versehen ist, die dazu ausgestaltet ist, eine Selbstzündungszeit der Wasserstoffmischung oder des wasserstoffhaltigen Gemischs und des ersten Heißgases zu berechnen.

2. Verfahren nach Anspruch 1, **dadurch gekennzeichnet, dass** es ferner das Bereitstellen von Sensoren, die mit der Steuereinrichtung zum Messen des Steuerungsparameters verbunden sind, und/oder das Bereitstellen eines Rechners umfasst, der mit der Steuereinrichtung zum Berechnen oder Simulieren des Steuerungsparameters verbunden ist.

3. Verfahren nach einem der vorhergehenden Ansprüche, **dadurch gekennzeichnet, dass** der erste Verbrennungsbereich mit einem Dual-Fuel-Versorgungssystem versehen ist, das eine Leitung (20) für Erdgas und eine Leitung (21) für eine Emulsion aus Öl und Wasser umfasst,
wobei das Bereitstellen einer Versorgung mit einem Brennstoff, der Wasserstoff oder wasserstoffhaltiges Gemisch ist, für den ersten Verbrennungsbereich das Verbinden der Versorgung (25) mit Brennstoff, der Wasserstoff oder wasserstoffhaltiges Gemisch ist, mit der Leitung (20) für Erdgas umfasst.

4. Verfahren nach einem der vorhergehenden Ansprüche, **dadurch gekennzeichnet, dass** der zweite Verbrennungsbereich mit einem Dual-Fuel-Versorgungssystem versehen ist, das eine Leitung (20) für Erdgas und eine Leitung (21) für eine Emulsion aus Öl und Wasser umfasst,
wobei das Bereitstellen einer Versorgung mit einem Brennstoff, der Wasserstoff oder ein wasserstoffhaltiges Gemisch ist, für den zweiten Verbrennungsbereich das Verbinden der Versorgung (25) mit Brennstoff, der Wasserstoff oder wasserstoffhaltiges Gemisch ist, mit der Leitung (20) für Erdgas umfasst.

5. Verfahren nach einem der Ansprüche 1 bis 4, **dadurch gekennzeichnet, dass** der erste Verbrennungsbereich von einer ersten Brennkammer definiert ist und der zweite Verbrennungsbereich von einer zweiten Brennkammer definiert ist.

6. Verfahren nach einem der Ansprüche 1 bis 4, **dadurch gekennzeichnet, dass** der erste Verbrennungsbereich und der zweite Verbrennungsbereich beide in einer selben Brennkammer definiert sind.

## Revendications

1. Procédé de modernisation d'une turbine à gaz qui était conçue pour fonctionner avec du pétrole ou du gaz naturel, la turbine à gaz (1) comprenant au moins un compresseur (2), une première zone de combustion (8) où un combustible est brûlé avec de l'air introduit par le compresseur (2) en générant un premier gaz chaud, une deuxième zone de combustion (13) où un combustible est brûlé avec l'oxygène contenu dans le premier gaz chaud en générant un deuxième gaz chaud, une turbine (5) où le deuxième gaz chaud est dilaté pour que de l'énergie mécanique soit collectée, le procédé comprenant :
- la fourniture d'un apport de combustible qui est de l'hydrogène ou un mélange contenant de l'hydrogène pour la première zone de combustion (8),
- la fourniture d'un apport de combustible qui est de l'hydrogène ou un mélange contenant de l'hydrogène pour la deuxième zone de combustion (13),
- la fourniture d'un apport d'eau pour la première zone de combustion (8) si elle n'est pas présente,
- la fourniture d'un contrôleur disposé de façon à recevoir au moins un paramètre de commande indicatif de la réactivité du mélange d'hydrogène ou du mélange contenant de l'hydrogène et du premier gaz chaud au niveau de la deuxième zone de combustion et à réguler la quantité d'eau fournie à la première zone de combustion sur la base du au moins un paramètre de commande ;
**caractérisé en ce que** le contrôleur est doté d'un logiciel configuré pour calculer le temps d'autoallumage du mélange d'hydrogène ou du mélange contenant de l'hydrogène et du premier gaz chaud.

2. Procédé selon la revendication 1, **caractérisé en ce qu'**il comprend en outre la fourniture de capteurs connectés au contrôleur pour mesurer le paramètre de commande et/ou la fourniture un élaborateur connecté au contrôleur pour calculer ou simuler le paramètre de commande.

3. Procédé selon l'une quelconque des revendications précédentes, **caractérisé en ce que** la première zone de combustion est dotée d'un système d'apport de combustible double comprenant une conduite (20) pour le gaz naturel et une conduite (21) pour une émulsion de pétrole et d'eau,
dans lequel la fourniture d'un apport de combustible qui est de l'hydrogène ou un mélange contenant de l'hydrogène à la première zone de combustion comprend la connexion de l'apport (25) de combustible qui est de l'hydrogène ou un mélange contenant de l'hydrogène à la conduite (20) pour le gaz naturel.

4. Procédé selon l'une quelconque des revendications précédentes, **caractérisé en ce que** la deuxième zone de combustion est dotée d'un système d'apport de combustible double comprenant une conduite (20) pour le gaz naturel et une conduite (21) pour une émulsion de pétrole et d'eau,
dans lequel la fourniture d'un apport de combustible qui est de l'hydrogène ou un mélange contenant de l'hydrogène à la deuxième zone de combustion comprend la connexion de l'apport (25) de combustible qui est de l'hydrogène ou un mélange contenant de l'hydrogène à la conduite (20) pour le gaz naturel.

5. Procédé selon l'une quelconque des revendications 1 à 4, **caractérisé en ce que** la première zone de combustion est définie par une première chambre de combustion et la deuxième zone de combustion est définie par une deuxième chambre de combustion.

6. Procédé selon l'une quelconque des revendications 1 à 4, **caractérisé en ce que** la première zone de combustion et la deuxième zone de combustion sont toutes deux définies dans une même chambre de combustion.
